# EUROPÄISCHE PATENTANMELDUNG

(11) **EP 1 936 095 A2**
(43) Veröffentlichungstag der Anmeldung: **25.06.2008**
(21) Anmeldenummer: 07121199.9
(22) Anmeldetag: 21.11.2007
(51) Int. Cl.: E06B 3/24, H01L 31/00, F24J 2/04

(54) **Fenster**

(30) Priorität: 18.12.2006 DE 202006019055 U
(71) Anmelder: SCHÜCO International KG, 33609 Bielefeld (DE)
(72) Erfinder: Meyer, Jürgen, 32545 Bad Oeynhausen (DE); Pankoke, Ulrich, 33824 Werther (DE)
(74) Vertreter: Dantz, Jan Henning

(57) **Zusammenfassung**

Ein Fenster, insbesondere für eine Fassade oder ein Lichtdach, weist einen Rahmen aus einem wärmegedämmten Verbundprofil (11) auf, an dem auf einer Seite eine erste Scheibe (6) über randseitig angeordnete Dichtungen (9, 21, 22) gehalten ist und an einer zweiten Seite beabstandet von der ersten Scheibe (6) eine zweite Scheibe (8) über randseitig angeordnete Dichtungen (10, 21, 22) gehalten ist. Zwischen der ersten und der zweiten Scheibe (6, 8) ist ein transluzentes Flächenelement (25) angeordnet ist, das zur solaren Energiegewinnung genutzt wird. Dadurch kann auf effiziente Weise eine Verschattung erfolgen.

## Beschreibung

Die vorliegende Erfindung betrifft ein Fenster, insbesondere für eine Fassade oder ein Lichtdach.

Es sind Fenster zur Montage an Gebäudeöffnungen bekannt, die einen Rahmen aus einem wärmegedämmten Verbundprofil aufweisen, an dem mindestens eine Scheibe eingefasst ist. Um den Innenraum des Gebäudes verschatten zu können, sind meist benachbart zu dem Fenster bewegbare Verschattungselemente, wie Jalousien oder Rollläden vorgesehen.

Zudem ist es bekannt, zur solaren Energiegewinnung Flächenelemente an einem Dach oder einem anderen Gebäudeteil zu montieren. Auch diese Solarelemente sind meist in einen Rahmen eingefasst und könnten zur Verschattung eingesetzt werden.

Es ist daher Aufgabe der vorliegenden Erfindung ein Fenster zu schaffen, das bei einfachem Aufbau eine Verschattung bereitstellt, die zudem zur solaren Energiegewinnung eingesetzt wird.

Diese Aufgabe wird mit einem Fenster mit den Merkmalen des Anspruches 1 gelöst.

Erfindungsgemäß umfasst das Fenster einen Rahmen aus einem wärmegedämmten Verbundprofil, an dem auf einer Seite eine erste Scheibe über randseitig angeordnete Dichtungen gehalten ist und an einer zweiten Seite beabstandet von der ersten Scheibe eine zweite Scheibe über randseitig angeordnete Dichtungen gehalten ist, wobei zwischen der ersten und der zweiten Scheibe ein transluzentes Flächenelement angeordnet ist, das zur solaren Energiegewinnung genutzt wird. Dadurch kann das Fenster neben der Funktion des Verschließens einer Gebäudeöffnung auch eine Verschattungsfunktion übernehmen, wobei das Flächenelement geschützt zwischen der ersten und der zweiten Scheibe angeordnet ist. Durch das Flächenelement kann gleichzeitig eine Energiegewinnung erfolgen, die dann in Geräten oder Anlagen im Gebäude verwertet werden kann. Unter "transluzent" wird ein Flächenelement verstanden, das zumindest teilweise einen Lichtdurchtritt ermöglicht, so dass nur eine Verschattung gegeben ist, nicht jedoch eine opake, das heißt lichtundurchlässige Gestaltung des Flächenelementes vorgesehen ist. Dadurch wird die Anordnung des Flächenelementes im inneren des Gebäudes als angenehmer empfunden, da die Menschen in den Räumen die Witterung, das Tageslicht etc. durch den Lichteinfall durch das Flächenelement einschätzen können, die Personen im Inneren aber durch eine gewisse Verschattung vor grellem Sonnenlicht geschützt sind.

Gemäß einer bevorzugten Ausgestaltung der Erfindung sind die erste Scheibe, das Flächenelement und die zweite Scheibe einzeln an dem Fenster montierbar und demontierbar. Dadurch ist das Fenster modulartig aufgebaut, so dass bei einer Beschädigung eines Bauteiles eine Reparatur nur dieses Bauteiles möglich ist, während die anderen Bauteile weiter genutzt werden können. Insbesondere kann der Rahmen aus dem Verbundprofil an der Gebäudeöffnung montiert bleiben.

Vorzugsweise weist das Flächenelement Durchbrechungen auf, die einen teilweisen direkten Lichtdurchtritt durch das Flächenelement ermöglichen. Diese Durchbrechungen können durch Aussparungen gebildet sein, die in regelmäßigen Abständen angeordnet sind oder ein Muster ergeben. Die Fläche der Durchbrechungen kann zwischen 10 % bis 40 %, vorzugsweise 15 % bis 25 % des Flächenelementes einnehmen.

Um das Flächenelement für die solare Energiegewinnung zu nutzen, können an dem Flächenelement Leitungen vorgesehen sein, die von einem Fluid durchströmbar sind. Die Leitungen können dabei durch Rohre oder Schläuche gebildet sein, die das Flächenelement in regelmäßigen Abständen durchziehen. Dadurch lässt sich das Flächenelement auf einfache Weise zur Wärmeabsorption nutzen.

Um die Rohre und Leitungen gut an dem Flächenelement unterbringen zu können, kann dieses im Querschnitt eine gewellte Form aufweisen, wobei die Wellen gekrümmt oder kantig ausgebildet sein können. Für ein gutes Absorptionsvermögen kann das Flächenelement ein Blech, Fasermatten oder andere Absorptionselement umfassen. Zudem ist es möglich, dass an dem Flächenelement ein oder mehrere photovoltaische Elemente zur Stromerzeugung vorgesehen sind.

Gemäß einer bevorzugten Ausführungsform der Erfindung ist die erste Scheibe und die zweite Scheibe randseitig an gegenüberliegenden Seiten jeweils an einer Dichtung angelegt. Dadurch kann jede Scheibe randseitig festgeklemmt werden und bei Bedarf getrennt demontiert werden. Zudem wird eine zuverlässige Abdichtung erreicht.

Das Verbundprofil weist vorzugsweise zwei Metallprofile, insbesondere aus Aluminium, und zwischen den Metallprofilen ein isolierendes Profil aus Kunststoff auf Dadurch könnten Temperaturunterschiede von der Außenseite zur Innenseite gut isoliert werden.

Vorzugsweise ist mindestens eine Scheibe als Isolierglasscheibe ausgebildet. Dadurch kann eine besonders gute Wärmedämmung erreicht werden.

Für eine einfache Montage kann das Verbundprofil zumindest an einer Seite zur Festlegung an der Scheibe mit einer Glashalteleiste gekoppelt sein. Ferner ist auch der Einsatz von Adapterprofilen oder anderen Elementen zur modulartigen Festlegung der Scheiben und/oder des Flächenelementes möglich.

Für eine besonders gute Verwertung der Solarenergie ist mindestens eine Scheibe auf der zu dem Flächenelement gewandten Seite reflektierend ausgebildet oder mit einer reflektierenden Beschichtung versehen. Dies erhöht den Wirkungsgrad für das Flächenelement.

Die Erfindung wird nachfolgend anhand mehrerer Ausführungsbeispiele mit Bezug auf die beigefügten Zeichnungen erläutert. Es zeigen:

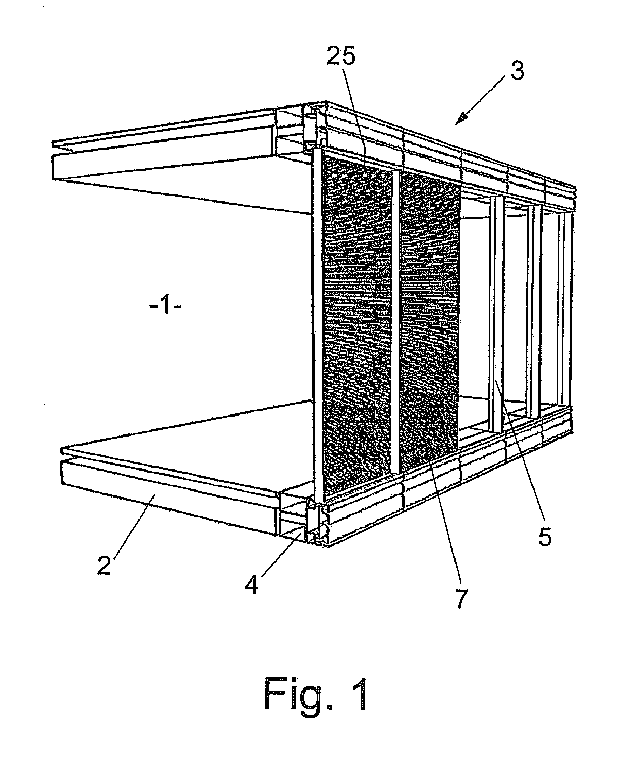

- Figur 1: eine perspektivische Ansicht einer Gebäudeöffnung mit einem erfindungsgemäßen Fenster;
- Figur 2: eine Schnittansicht durch das Fenster der Figur 1;
- Figuren 3a und 3b: zwei Schnittansichten durch ein erfindungsgemäßes Fenster gemäß einer modifizierten Ausführungsform;
- Figuren 4a und 4b: zwei Schnittansichten durch ein weiteres Ausführungsbeispiel eines erfindungsgemäßen Fensters;
- Figur 5: eine Schnittansicht des Fensters der Figur 2 mit einem Flächenelement;
- Figuren 6a und 6b: zwei Ansichten des Flächenelementes des Fensters der Figur 1; und
- Figur 7a und 7b: zwei vergrößerte Ansichten des Flächenelementes der Figuren 6a und 6b.

Ein Gebäude 1 umfasst eine Vielzahl von Gebäudeöffnungen, die durch eine Fassade 3 verschlossen sind. Die Fassade 3 besitzt eine Vielzahl von Fenstern, die starr an der Fassade 3 montiert sind, aber gegebenenfalls auch bewegbar sein können. Ein Fenster 5 erstreckt sich dabei zwischen den Decken 2 des Gebäudes, wobei benachbart zu den Decken 2 ein Raum 4 zur Aufnahme von Anlagetechniken vorgesehen ist.

Durch die geschosshohen Fenster 5 kann es bei intensiver Sonneneinstrahlung zu einer erheblichen Erwärmung kommen. Daher sind an der Außenseite der Fassade Verschattungen 7 angeordnet, die in Form von Lamellen, Jalousien oder Rollladen vorgesehen sind. Diese Verschattungen können auch innerhalb der Räume oder innerhalb der Verglasung angeordnet werden. Ein erfindungsgemäßes Fenster 5 weist ein Flächenelement 25 auf, das ebenfalls für eine Verschattung innerhalb des Gebäudes sorgt und zudem zur solaren Energiegewinnung genutzt wird, wie dies nachstehend noch ausgeführt wird.

In dem gezeigten Ausführungsbeispiel ist das Fenster 5 an einer Fassade 3 montiert. Es ist natürlich auch möglich, ein entsprechendes Fenster 5 an einem Lichtdach, an einer kleineren Gebäudeöffnung oder an anderen Positionen vorzusehen.

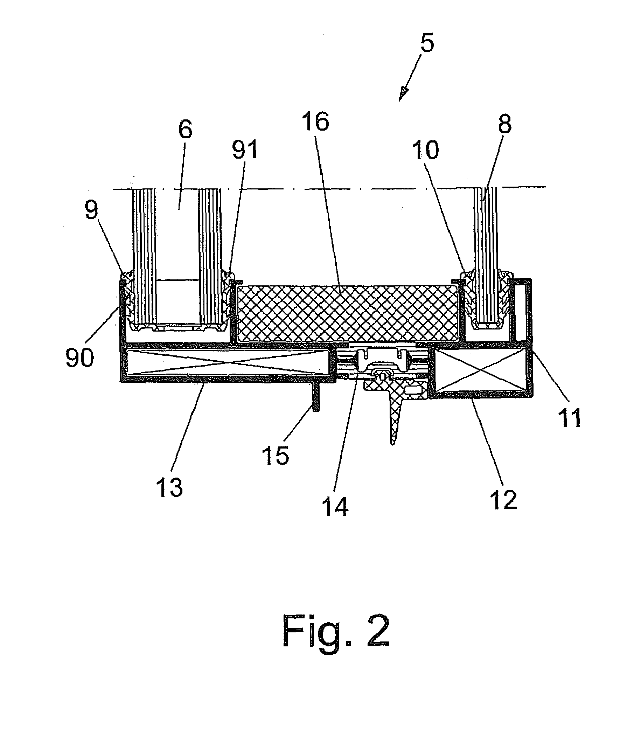

In Figur 2 ist ein Schnitt durch ein erfindungsgemäßes Fenster 5 gezeigt, bei dem das Flächenelement 25 weggelassen wurde. Das Fenster 5 umfasst eine erste Scheibe 6, die als Isolierglasscheibe ausgebildet ist, und beabstandet hiervon eine zweite Scheibe 8, die als Einfachglasscheibe ausgebildet ist. Die erste Scheibe 6 und die zweite Scheibe 8 werden in einem Verbundprofil 11 gehalten, wobei hierfür im Randbereich Dichtungen 9 und 10 vorgesehen sind. Das Verbundprofil 11 umfasst ein Außenprofil 12 aus Metall, vorzugsweise aus Aluminium, an dem eine Aufnahme für den Rand der Scheibe 8 vorgesehen ist, wobei in die Aufnahme eine U-förmige Dichtung 10 eingefügt ist. Dadurch ist die Scheibe 8 klemmend innerhalb der Aufnahme an dem Außenprofil 12 festgelegt. Das Außenprofil 12 ist über Isolierstege 14 aus Kunststoff mit einem Innenprofil 13 verbunden, an dem ebenfalls eine Aufnahme für die erste Scheibe 6 vorgesehen ist. Die erste Scheibe 6 ist durch eine U-förmige Dichtung 9 mit an gegenüberliegenden Seiten der Scheibe 6 vorgesehenen Schenkeln 90 und 91 klemmend an dem Innenprofil 13 festgelegt. Auch das Innenprofil 13 ist aus Metall, vorzugsweise aus extrudiertem Aluminium hergestellt.

An dem Verbundprofil 11 ist ferner an dem Innenprofil 13 ein Haltesteg 15 zur Montage des Fensters 5, beispielsweise an einer Fassade 3 angeordnet. Der Haltesteg 15 kann auch als Hohlkammersteg ausgebildet sein, ebenso können andere Befestigungsmittel zur Montage des Verbundprofils 11 vorgesehen sein.

Zwischen dem Außenprofil 12 und dem Innenprofil 13 ist ferner ein streifenförmiges Wärmedämmmaterial 16 vorgesehen, an dem auch ein Flächenelement montierbar ist.

Zur Montage des Fensters 5 werden die Scheiben 6 und 8 mit den Dichtungen 9 und 10 in das Verbundprofil 11 eingefügt und dann fest miteinander verbunden. Dadurch sind nur sehr wenige Bauteile zur Herstellung des Fensters 5 erforderlich.

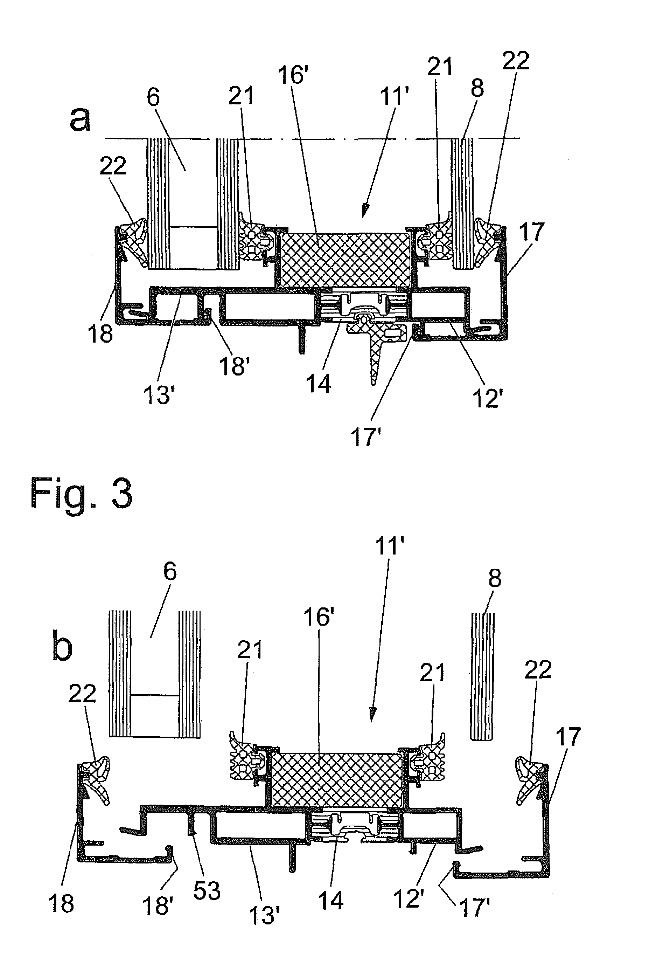

In den Figuren 3a und 3b ist eine modifizierte Ausführungsform eines erfindungsgemäßen Fensters gezeigt. Ein Verbundprofil 11' umfasst ein Außenprofil 12' aus Metall, an dem an der Innenseite eine Dichtung 21 festgelegt ist. Zur Montage der zweiten Scheibe 8 wird diese an die Dichtung 21 gedrückt und anschließend eine Glashalteleiste 17 festgelegt, die L-förmig ausgebildet ist und einen Vorsprung 17' umfasst, der an einem Steg in Eingriff mit dem Außenprofil 12' gebracht werden kann, wobei an dem gegenüberliegenden Ende der Glashalteleiste 17 eine Dichtung 22 festgelegt ist. Dadurch kann die zweite Scheibe 8 klemmend zwischen den Dichtungen 21 und 22 montiert werden, wobei zur Demontage die Glashalteleiste 17wieder gelöst werden kann, so dass bei eingebautem Fenster 5 die Scheibe 8 ausgewechselt werden kann.

Gleichermaßen ist die erste Scheibe 6 an dem Innenprofil 13' gehalten, wobei das Innenprofil 13' eine Dichtung 21 aufweist, die randseitig an der Scheibe 6 anliegt. Ferner ist eine weitere Glashalteleiste 18 vorgesehen, die L-förmig ausgebildet ist und mit einem Vorsprung 18' an einem Steg des Innenprofils 13' anliegt. An der Glashalteleiste 18 ist eine Dichtung 22 festgelegt, so dass der Rand der Scheibe 6 zwischen den Dichtungen 21 und 22 eingefasst ist. Durch Lösen der Glashalteleiste 18 kann die erste Scheibe 6 bei Bedarf einzeln demontiert werden, um einen Zugang zu dem Flächenelement oder dem Wärmedämmmaterial 16 zu erhalten.

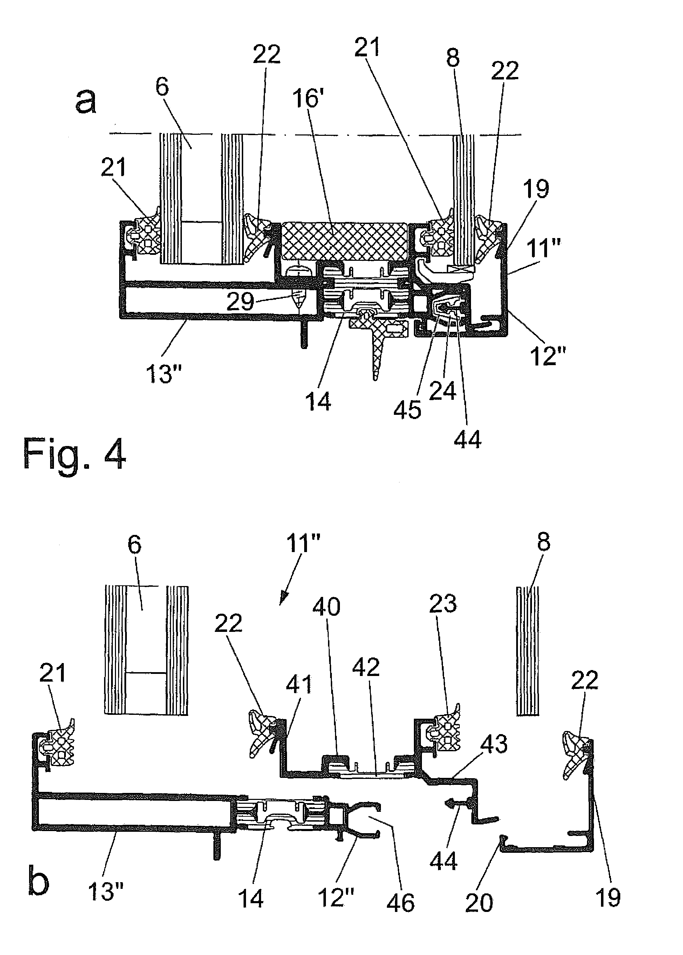

In den Figuren 4a und 4b ist eine weitere Ausführungsform eines erfindungsgemäßen Fensters gezeigt. Ein Verbundprofil 11" umfasst ein Innenprofil 13", das über ein Isolierprofil 14 mit einem Außenprofil 12" verbunden ist. An dem Innenprofil 13" ist eine erste Scheibe 6 zwischen zwei Dichtungen 21 und 22 festgelegt. Das Verbundprofil 11 " weist zudem ein Adapterprofil 40 auf, das an dem Außenprofil 12" montierbar ist. Das Adapterprofil 40 weist ein inneres Metallprofil 41 auf, an dem die Dichtung 22 zur Festlegung der ersten Scheibe 6 fixiert ist. Ferner ist ein Isolierprofil 42 vorgesehen, das das innere Metallprofil 41 mit einem äußeren Metallprofil 43 verbindet. An dem äußeren Metallprofil 43 ist eine Dichtung 23 zur Festlegung der zweiten Scheibe 8 fixiert. Ferner ist an dem Metallprofil 43 ein Kopplungssteg 44 angeformt, der in eine Steckverbindung 24 einfügbar ist. Die Steckverbindung 24 umfasst ein Halteelement 45, das in eine U-förmige Aufnahme 46 an dem Außenprofil 12" eingefügt ist. Durch Einstecken des Kopplungssteges 44 in die Steckverbindung 24 wird das Adapterprofil 40 an dem Außenprofil 12" festgelegt.

Ferner ist an der zweiten Scheibe 8 eine Glashalteleiste 19 vorgesehen, an der eine Dichtung 22 festgelegt, so dass die Scheibe 8 zwischen den Dichtungen 22 und 23 gehalten ist. Die Glashalteleiste 19 umfasst einen Vorsprung 20, der an einem Steg des Außenprofil 12" festlegbar ist.

Auch bei dem in Figuren 4a und 4b gezeigten Ausführungsbeispiel sind die Scheiben 6 und 8 getrennt demontierbar und montierbar, so dass das Fenster 5 an einer Fassade 3 im übrigen montiert bleiben kann.

Die Montage des Fensters 5 nach dem Ausführungsbeispiel der Figuren 4a und 4b kann so erfolgen, dass das Innenprofil 13" mit dem Isolierprofil 14 und dem Außenprofil 12" ein Rahmen mit bekannten Hohlkammer-Eckverbindern hergestellt wird und eine innere Anlagedichtung 21 eingezogen wird. In diesen Rahmen wird die innere Scheibe 6 eingelegt. Anschließend wird das Adapterprofil 40 mit den bereits eingezogenen Dichtungen 22 und 23 über eine Steckverbindung 24 in den Rahmen gesteckt und über Schrauben 29 gesichert. Die Isolierstege 14 sowie der Isoliersteg 42 sind dabei benachbart angeordnet.

An dem Adapterprofil 40 wird ein Wärmedämmmaterial 16' und ein Flächenelement 25 montiert. Die Scheibe 8 an der Außenseite wird an die Dichtung 23 angelegt und über eine Glashalteleiste 19 gesichert. Dadurch besitzt das so hergestellte Fenster einen schichtweisen Aufbau, das eine Montage und Demontage der einzelnen Bauteile ermöglicht.

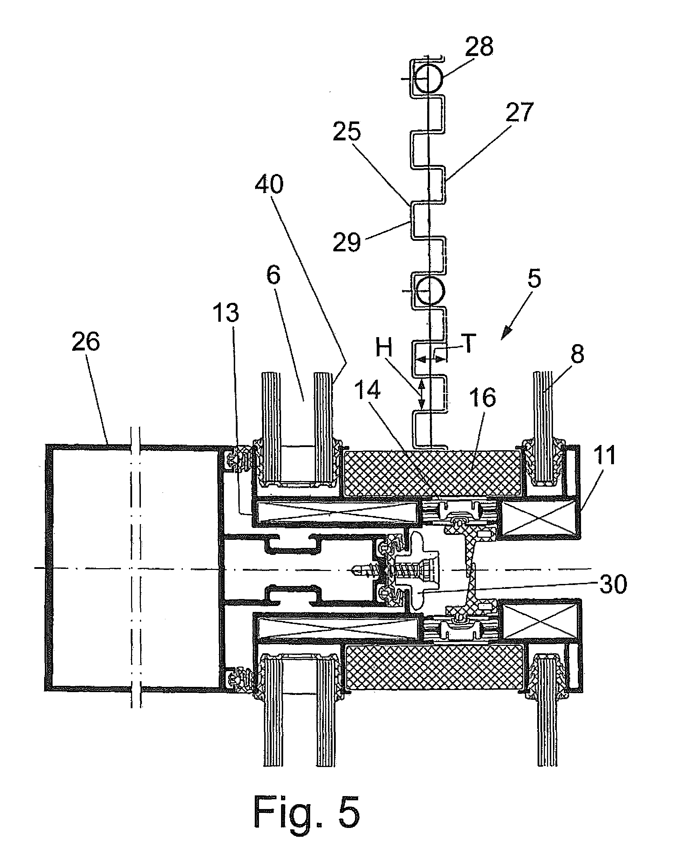

In Figur 5 ist ein erfindungsgemäßes Fenster 5 in der montierten Position dargestellt. Das Fenster 5 umfasst ein Verbundprofil 11, das zwischen der ersten Scheibe 6 und der zweiten Scheibe 8 ein transluzentes Flächenelement 25 aufweist. Das Flächenelement 25 kann über Abstandshalter oder andere mechanische Mittel zwischen den Scheiben 6 und 8 gehalten sein. Randseitig kann das Flächenelement 25 auch an dem ein oder mehrteilig ausgebildeten Wärmedämmelement 16' an Aufnahmen oder Haltern fixiert sein. Das Fenster 5 ist dabei an einem Fassadenprofil 26 der Fassade 3 befestigt. Dabei wird das Fenster 5 durch einen Eindrehhalter 30 an dem Fassadenprofil 26 gehalten.

Das transluzente Flächenelement 25 zwischen den Scheiben 6 und 8 besteht aus einem gewellten Absorberblech 29, welches abschnittsweise Ausnehmungen 27 aufweist, durch die Sonnenstrahlen direkt in das Innere des Gebäudes eintreten können. Um eine optisch ansprechende Fläche zu erzielen, wechseln sich die Ausnehmungen und geschlossenen Flächen an dem Flächenelement 25 gleichmäßig ab. Die Abstände zwischen den einzelnen Durchbrechungen 27 sind ca. 10 mm groß. In dem Flächenelement 25 sind an einer Seite Rohre 28 eingefügt, die von dem Absorberblech 29 an drei Seiten umgeben sind. Die Rohre 29 können mit Wasser oder einem anderen Fluid durchströmt werden, wobei die gewonnene Wärme weiteren Wärmetauschern zur Nutzung der Wärmeenergie zugeleitet wird. Zwischen den Rohren 28 und dem Absorberblech 29 wird eine gute Verbindung hergestellt, die einen optimalen Wärmefluss gewährleistet. Das Flächenelement 25 kann dabei so angeordnet sein, dass es einen gesamten Fensterrahmen 5 ausfüllt. Es ist auch möglich, dass Flächenelement 25 nur über einen Teil des Fensters 5 zu erstrecken.

Vorzugsweise befindet sich auf der Isolierglasscheibe 6 zum Flächenelement 25 hin eine wärmereflektierende und transparente Schicht 40. Dadurch erhöht sich der Wirkungsgrad der Wärmegewinnung.

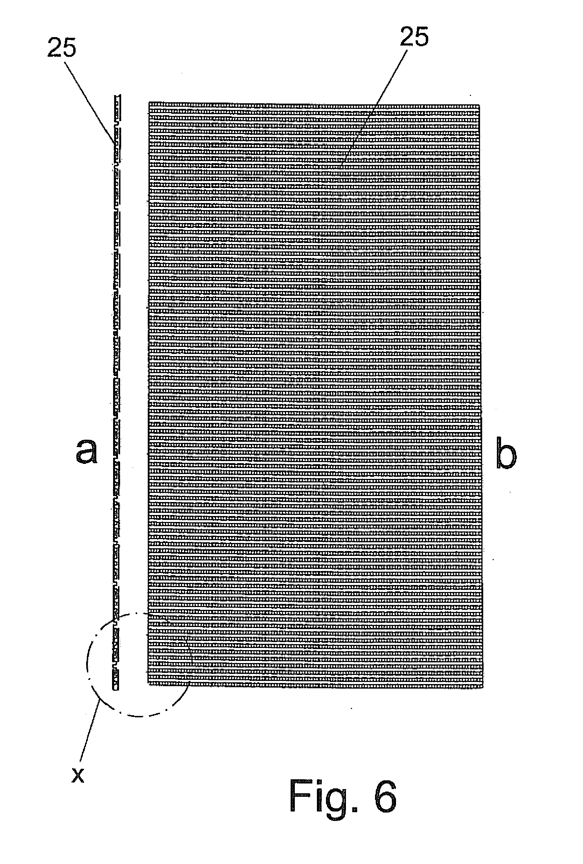

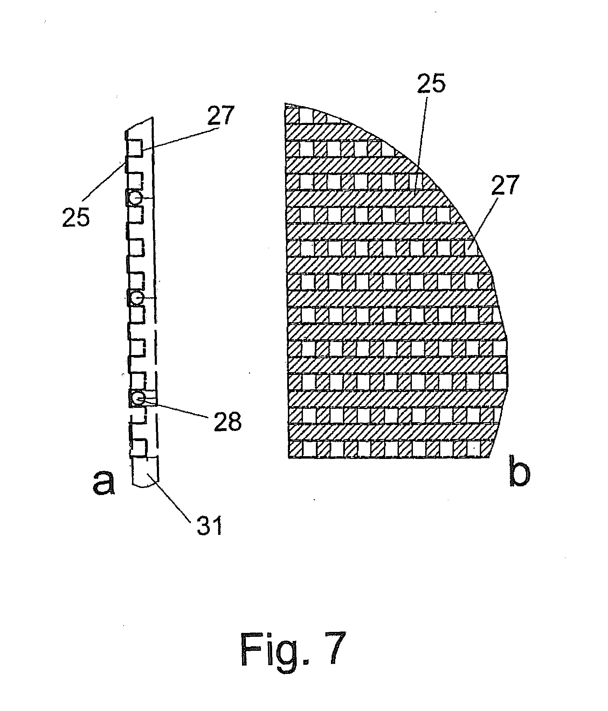

In den Figuren 6a und 6b und 7a und 7b ist das Flächenelement 25 im Detail dargestellt. Das Flächenelement 25 besitzt eine regelmäßige Struktur mit Durchbrechungen 27, die aus dem Innenraum erkennen lassen, welche Lichtverhältnisse außerhalb des Gebäudes herrschen. Eine solche transluzente Struktur kann durch Durchbrechungen 27 mit quadratischem oder rechteckigem Querschnitt vorgenommen sein, die in regelmäßigen Abständen angeordnet sind. Zwischen den Durchbrechungen 27 sind Streifen vorgesehen, die Nuten ausbilden, in denen Rohre 28 geführt werden können. Dadurch wird auf der einen Seite eine Verschattung durch das Flächenelement 25 gewährleistet und zudem eine Gewinnung von Wärmeenergie ermöglicht. Die Rohre 28 können dabei mäanderförmig oder nach Art einer Harfe durch das Flächenelement 25 laufen. Die Durchbrechungen 27 nehmen vorzugsweise eine Fläche zwischen 10 % bis 40 % der gesamten Fläche des Flächenelementes 25 ein. Statt einer regelmäßigen Anordnung der Durchbrechungen 27 können natürlich auch Muster oder Firmenlogos etc. durch die Durchbrechungen 27 optisch dargestellt werden.

Im dargestellten Ausführungsbeispiel befinden sich die Rohre 28 und die Ausnehmungen 27 auf der nach außen gerichteten Seite der Konstruktion. Die Rohre 28 und Ausnehmungen 27 können je nach optischem Gefallen aber auch innen angeordnet sein, z.B. im Bereich eines Erdgeschosses. Sofern photovoltaische Elemente montiert werden, sind diese jedoch auf der äußeren Seite angeordnet.

Die wellenförmige Form des Flächenelementes 25 hat weiterhin den Vorteil, dass durch die Ausnehmungen 27 in dem Flächenelement 25 starke direkte Sonnenstrahlung, aufgrund des steilen Einfallswinkels im Sommer und zur Mittagszeit, nicht in das Gebäude eindringen kann, sondern auf die horizontalen Abschnitte des Flächenelementes 25 auftreffen. Hingegen gelangen die milderen Sonnenstrahlen, aufgrund eines flacheren Einstrahlwinkels (Morgens, Abends, Winter), direkt durch das Flächenelement 25. Die räumliche Form des Flächenelementes 25 kann auf die im Tages- und Jahresverlauf wechselnden Einstrahlwinkel abgestellt werden. Die Tiefe T und die Höhe H der Abschnitte des gewellten Flächenelementes 25 sind dabei etwa gleich groß, beispielsweise besitzen sie eine Länge von jeweils 10-40mm, so dass sich ein filigranes Erscheinungsbild ergibt.

## Patentansprüche

1. Fenster, insbesondere für eine Fassade oder ein Lichtdach, mit einem Rahmen aus einem wärmegedämmten Verbundprofil (11), an dem auf einer Seite eine erste Scheibe (6) über randseitig angeordnete Dichtungen (9, 21, 22) gehalten ist und an einer zweiten Seite beabstandet von der ersten Scheibe (6) eine zweite Scheibe (8) über randseitig angeordnete Dichtungen (10, 21, 22) gehalten ist, wobei zwischen der ersten und der zweiten Scheibe (6, 8) ein transluzentes Flächenelement (25) angeordnet ist, das zur solaren Energiegewinnung genutzt wird.

2. Fenster nach Anspruch 1, **dadurch gekennzeichnet, dass** die erste Scheibe (6) das Flächenelement (25) und die zweite Scheibe (8) einzeln an dem Fenster montierbar und demontierbar sind.

3. Fenster nach Anspruch 1 oder 2, **dadurch gekennzeichnet, dass** das Flächenelement (25) Durchbrechungen (27) aufweist, die einen teilweisen Lichtdurchtritt durch das Flächenelement (25) ermöglichen.

4. Fenster nach Anspruch 3, **dadurch gekennzeichnet, dass** die Durchbrechungen in regelmäßigen Abständen angeordnet sind und eine Fläche zwischen 10 % bis 40 %, vorzugsweise 15 % bis 25 % des Flächenelementes (25) ausmachen.

5. Fenster nach einem der Ansprüche 1 bis 4, **dadurch gekennzeichnet, dass** das Flächenelement (25) Leitungen (28) aufweist, die von einem Fluid durchströmbar sind.

6. Fenster nach Anspruch 5, **dadurch gekennzeichnet, dass** die Leitungen (28) durch Rohre oder Schläuche gebildet sind, die das Flächenelement (25) in regelmäßigen Abständen durchziehen.

7. Fenster nach einem der Ansprüche 1 bis 6, **dadurch gekennzeichnet, dass** das Flächenelement (25) im Querschnitt eine gewellte Form aufweist.

8. Fenster nach einem der Ansprüche 1 bis 7, **dadurch gekennzeichnet, dass** das Flächenelement (25) ein oder mehrere photovoltaische Elemente aufweist.

9. Fenster nach einem der Ansprüche 1 bis 8, **dadurch gekennzeichnet, dass** das Flächenelement (25) zur Absorption ein Blech, Fasermatten oder andere Absorptionselemente umfasst.

10. Fenster nach einem der Ansprüche 1 bis 9, **dadurch gekennzeichnet, dass** die erste Scheibe (6) und die zweite Scheibe (8) randseitig an gegenüberliegenden Seiten an einer Dichtung (9, 10, 21, 22) anliegen.

11. Fenster nach einem der Ansprüche 1 bis 10, **dadurch gekennzeichnet, dass** das Verbundprofil (11) zwei Metallprofile (12, 13), vorzugsweise aus Aluminium, und zwischen den Metallprofilen (12, 13) ein isolierendes Profil (14) aus Kunststoff aufweist.

12. Fenster nach einem der Ansprüche 1 bis 11, **dadurch gekennzeichnet, dass** mindestens eine Scheibe (8) als Isolierglasscheibe ausgebildet ist.

13. Fenster nach einem der Ansprüche 1 bis 12, **dadurch gekennzeichnet, dass** das Verbundprofil (11) zumindest an einer Seite zur Festlegung einer Scheibe (6, 8) mit einer Glashalteleiste (18, 19) gekoppelt ist.

14. Fenster nach einem der Ansprüche 1 bis 13, **dadurch gekennzeichnet, dass** mindestens eine Scheibe (6, 8) auf der zu dem Flächenelement (25) gewandten Seite reflektierend ausgebildet oder mit einer reflektierenden Beschichtung versehen ist.
